# EUROPEAN PATENT APPLICATION

(11) **EP 1 209 006 A1**
(43) Date of publication of application: **29.05.2002**
(21) Application number: 00830767.0
(22) Date of filing: 22.11.2000
(51) Int. Cl.: B60B 21/06

(54) **Spoked wheel and relative spoke fixing nipples**

(71) Applicant: COSTRUZIONI MECCANICHE RHO S.p.A., 20017 Rho (Milano) (IT)
(72) Inventor: Leo, Leonardo, 25065 Lumezzane (Brescia) (IT); Fratus, Roberto, 25036 Palazzolo Sull'oglio (Brescia) (IT); Gittani, Giuseppe Ulisse, 20010 Vanzago (Milano) (IT); Finzi, Andrea, 20090 Trezzano S. Naviglio (Milano) (IT); Bessone, Lorenzo, 10100 Torino (IT)
(74) Representative: Petruzziello, Aldo

(57) **Abstract**

A spoked wheel (1), particularly for motor cycles and motor vehicles, comprises a rim (2) made integral with a hub (3) by means of a plurality of spokes (4) tensioned by means of threaded connections or nipples (20) housed in respective seats or cups (13) comprising a through hole (41; 41', 42') formed in the channel (9) of the rim (2); interposed between the nipples (20) and the cups (13) are sealing means (14) able to prevent air from passing through the gap formed between the outer surface of the nipples and the side walls of the holes in the cups.

## Description

The present invention refers in general to a spoked wheel for vehicles such as motorcycles, mopeds, motorcars and the like, and in particular to nipples used to secure the spokes to the wheel rim.

The motorcycle and motorcar industry has recently had a growing requirement for spoked wheels for use mainly in those of types of motorcycles and motorcars that exalt the aesthetic aspect.

A wheel is defined as a spoked wheel when its outer circumferential part, called the rim, is made integral with its central circumferential part, called the hub, through the use of a certain number of spokes which in turn are tensioned by means of screwing to threaded connections, commonly called nipples, spoke stretchers or spoke tensioners.

A nipple consists of a substantially cylindrical body having a discoid head with a greater diameter than that of the body. The nipple has a threaded through hole axially, intended to receive an end of the spoke, which also is suitably threaded. The head of the nipple has a radial notch to receive, for example, a point of a tool such as a screw driver for use in tensioning the spokes. The opposite end of the nipple from the head is prismatic in shape to receive a tool such as a key for screwing/unscrewing of the nipple during assembly of the spoke.

In the central part of the rim of spoked wheels, commonly called the rim channel, substantially circular tapered seats, commonly called cups, are generally formed to receive the nipples. That is to say the head of the nipple is housed in a rim cup and the body of the nipple protrudes radially inwards from the rim. One end of the spoke is constrained to the hub and the other end is screwed into the threaded hole of the nipple that protrudes from the rim.

Spoked wheels of this type have a drawback due to the lack of air tightness between the rim and the nipple and the nipple and the spoke. Consequently, if a tubeless cover or tyre, without an inner tube, is used in a spoked wheel of this type, the air inside the tyre leaks out through the gaps generated between the cup and the nipple and between the through hole in the nipple and the spoke.

To avoid this drawback, it is necessary to use an inner tube inside the tyre. This leads to drawbacks due both to the additional cost of the inner tube and to the fact that the wide use of tubeless tyres has made it difficult to find inner tubes on the market.

Moreover, the use of an inner tube leads to drawbacks related to safety. In fact a spoked wheel with an inner tube goes out of balance more easily than a tubeless wheel. Moreover, the inner tube often tears following puncture and thus the tyre suffers a sudden, sharp loss of pressure which endangers the stability of the vehicle with consequent risks for the driver.

To avoid these drawbacks, according to the prior art spoked wheels have been designed in which the seats of the nipples are formed in the lateral edges of the rim. That is to say, the nipples are positioned outside the area of the rim covered by the tyre and destined to be brought under pressure. In this case tubeless tyres without an inner tube can be used.

However, this solution has some drawbacks both of an aesthetic and of a practical nature, in that the fact that the ends of the spokes are carried on the lateral edge of the rim does not give the wheel a pleasing aesthetic appearance.

Furthermore, all types of spoked wheel according to the prior art have other types of drawbacks of a practical nature. Wheel rims are generally made of metal such as aluminium, steel or alloy. The nipples also are made of metallic material, generally steel. Since there is a low coefficient of friction between the two metallic materials , there is a poor seal between the nipple and the rim. Consequently, especially when the wheel travels over uneven terrain, because of the poor seal between the nipple and the cup, there is a slackening of the tension of the spoke which leads to a loss of balance in the wheel.

Another disadvantage of spoked wheels according to the prior art is that they do not have means for indicating to the user any loosening of a spoke. In fact the user notices that the spokes have loosened when the wheel is out of balance and in this case goes to a specialized mechanic who balances the wheel by tightening the spokes that had slackened.

An object of the present invention is to eliminate the drawbacks of the prior art by providing a spoked wheel that can be used with tyres of the tubeless type, without an inner tube.

Another object of the present invention is to provide a spoked wheel that has an aesthetically pleasing appearance.

Another object of the invention is to provide such a spoked wheel that is able to signal any loosening of the spokes.

These objects are achieved in accordance with the invention with the characteristics listed in appended independent claim 1.

Another object of the invention is to provide a spoke securing nipple that enables a good seal to be achieved with the rim.

This object is achieved in accordance with the invention with the characteristics listed in appended independent claim 10.

Advantageous embodiments of the invention are apparent from the dependent claims.

The spoked wheel according to the invention has an outer circular element or rim made integral with an inner circular element or hub by means of a plurality of spokes. The spokes are tensioned by means of threaded connections or nipples housed in seats or cups formed in the rim. The nipples have a head able to be housed in the cup and a body able to pass through a through hole in the cup. The end of the body of the nipple has a blind threaded hole able to receive the threaded end of a spoke.

The peculiarity of the invention is that between the body of the nipple and the hole in the cup sealing means are interposed such as to prevent air from passing through the gap formed between the walls of the hole in the cup and the body of the nipple. This feature makes it possible to mount tubeless tyres, without an inner tube, on the rim. In fact, thanks to the use of said sealing means, pressurized air in the chamber formed between the inner part of the tyre and the rim cannot escape through the gap formed between the walls of the hole of the cup and the body of the nipple.

This solution holds various advantages:
- the additional costs due to the provision of an inner tube housed inside the tyre are eliminated;
- the risks of puncture with consequent tearing of the inner tube are eliminated;
- the nipples can be housed in the central part of the channel of the rim, enhancing the aesthetic appearance of the wheel;
- there is a high coefficient of friction between the sealing means and the cup and thus a better mechanical seal;
- any loosening of the spoke is signalled by a decrease in tyre pressure, due to a consequent loosening of the sealing means.

Further characteristics of the invention will be made clearer by the detailed description that follows, referring to purely exemplary and therefore non-limiting embodiments thereof, illustrated in the appended drawings, in which:
Figure 1 is a broken-off axial sectional view of a spoked wheel according to the invention;
Figure 2 is an exploded axial sectional view, showing a nipple according to the invention, a sealing ring, a cup of the rim and an end of a spoke shown broken off;
Figure 3 is an axial sectional view showing the elements of Figure 2 assembled;
Figure 4 is a part sectional view of a second embodiment of the invention, with an exploded view of a nipple, a seal, a rim portion and an end of a spoke shown broken off;
Figure 5 is a part sectional view, showing the elements of Figure 4 assembled;
Figure 6 is a part sectional view of a third embodiment of the invention showing, in an exploded view, a nipple, a seal, a rim portion and an end of a spoke shown broken off.

The spoked wheel and the nipple according to the invention will be described with the aid of the figures.

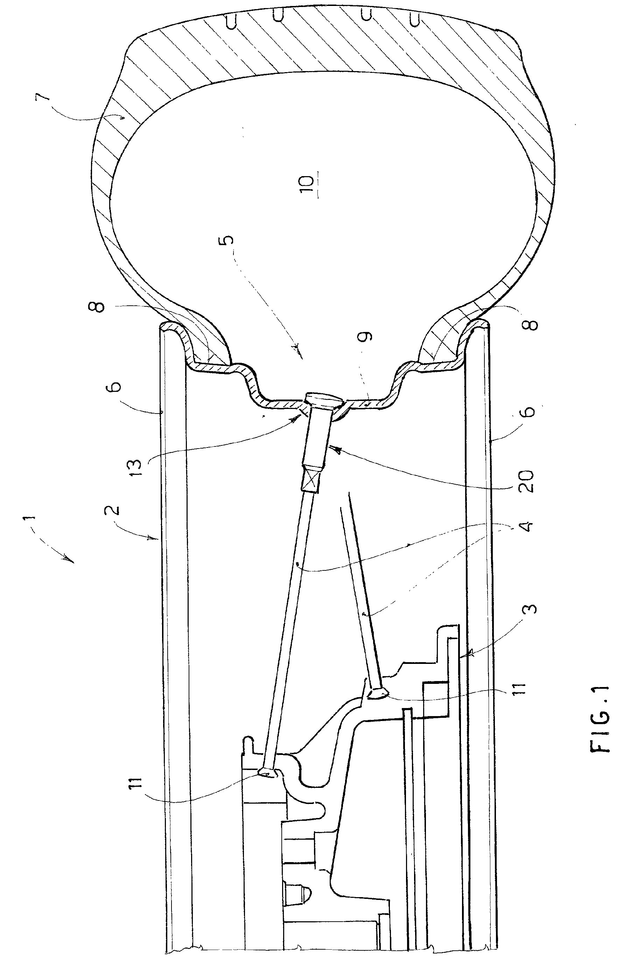

Figure 1 partially shows a spoked wheel, indicated as whole with reference numeral 1. The wheel 1 comprises an outer circumferential element 2, called a rim, and an inner circumferential element 3, called a hub, disposed coaxially to the rim 2 and having a smaller diameter than the diameter of the rim 2.

The rim 2 has an outer circumferential surface 5, substantially concave, defined between two lateral shoulders 6 of the rim, which form two annular edges. The concave circumferential surface 5 is destined to receive the annular edges of a tyre 7. The circumferential surface 5 of the rim has two rim beads 8 disposed alongside the shoulders 6 so that the beads of the tyre 7 abut against the rim beads 8. Between the two rim beads 8 a concave part of the rim called rim channel 9 is defined. In this manner between the inner surface of the tyre 7 and the outer surface of the channel 9 a chamber 10 is formed, destined to be filled with air to create pressure in the tyre 7.

The rim 2 is made integral with the hub 3 by means of a certain number of spokes 4. One end 11 of the spoke 4 is constrained to the hub 3 and the other end 12 of the spoke 4 is constrained to a nipple 20 housed in a seat or cup 13 formed in the channel 9 of the rim 2. Between the nipple 20 and the cup 13 are interposed sealing means 14 so that the pressurized air, contained in the chamber 10, cannot escape through the gaps between the cup 13 and the nipple 20.

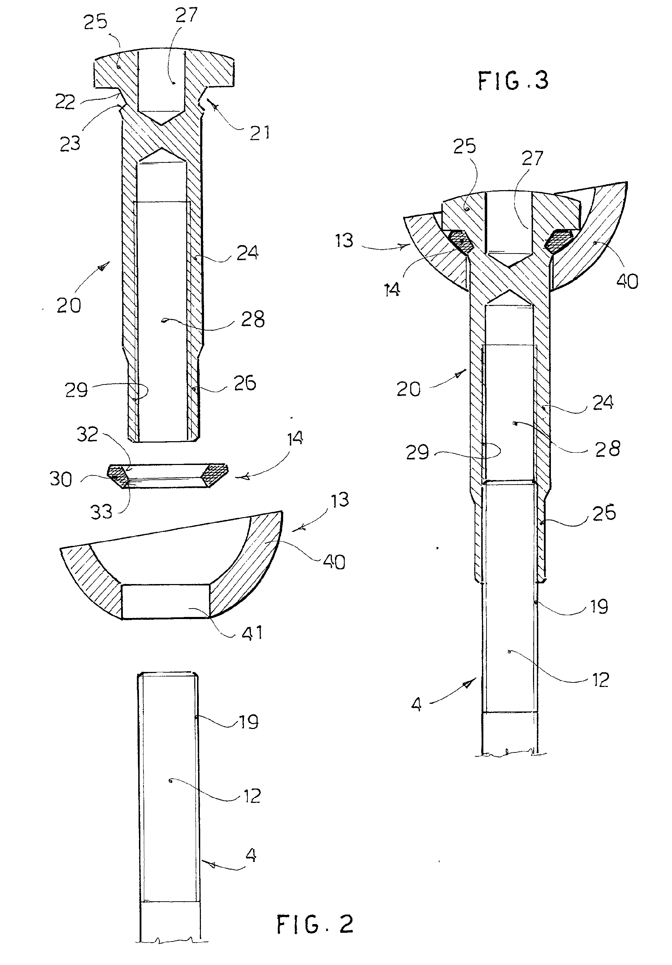

As shown in Figure 2, the nipple 20 comprises a substantially cylindrical body 24, which terminates at one end in a substantially discoid head 25, with a greater diameter than the diameter of the body 24 and at the other end terminates in a tubular part 26 with a substantially prismatic shape.

A blind hole 27 is formed on the head 25 with the walls shaped so as to be able to receive a tool, for example an Allen wrench, to allow rotation of the nipple 20. At the end of the prismatic part 26 a blind hole 28 is formed axially and extends through a large part of the body 24, stopping a short distance from the hole 27 in the head 25.

The blind hole 28 has an inner thread 29. The end part 12 of the spoke 4 has an outer thread 19 able to engage with the thread 29 in the blind hole of the nipple 20. In this manner screwing engagement between the nipple 20 and the spoke 4 can be achieved.

Beneath the head 25 of the nipple 20 a substantially annular seat 21 is formed such as to receive the sealing means 14. For this purpose the sealing means 14 comprise an O-ring seal 30 with an inner diameter substantially equal to the outer diameter of the seat 21 of the nipple, so that the seal 30 can be housed in the seat 21 of the nipple.

To achieve a better seal, the seat 21 is defined by a first annular wall 22, oblique and outwardly inclined, and by a second oblique annular wall 23 with an opposite slope to that of the first wall 22. In this manner the seat 21 has a substantially flared shape. Accordingly, the inner circumferential part of the sealing ring 30 comprises a first oblique wall 32 and a second oblique wall 33 with an opposite slope to the first wall. In this manner the inner part of the sealing ring 30 has a substantially tapering shape complementary to the seat 21. Thus when the seal 30 is housed in the seat 21, the first wall 32 of the seal 30 abuts against the first wall 22 of the seat 21 and the second wall 33 of the seal 30 abuts against the second wall 23 of the seat 21.

The cup 13 has a body 40 substantially shaped like an upturned dome and has a through hole 41 with a diameter equal to or slightly greater than the outside diameter of the body 24 of the nipple 20.

With reference to Figure 3, the sealing means 14 are housed in the seat 21 of the nipple. The body 24 of the nipple 20 is inserted in the hole 41 of the cup 13, so that the end 12 of the spoke 4 enters the blind hole 28 of the nipple 20. On screwing the nipple 20, for example by means of a tool applied to the hole 27 in the head 25 of the nipple, the end 12 of the spoke is drawn inside the hole 28 in the nipple and thus the spoke is tensioned.

As the nipple 20 is screwed onto the end 12 of the spoke, its head 25 comes nearer to the body 40 of the cup 13, until the lower wall of the seal 30 abuts against body 40 of the cup in the position around the hole 41, as shown in Figure 3. In this position, in which the spoke 4 is perfectly tensioned, thanks to the seal 30, air is prevented from passing in the annular gap that is created between the body 24 of the nipple 20 and the walls of the hole 41 in the cup 13. Since the hole 28 of the nipple is a blind hole, the seal 30 alone is sufficient to ensure a tight seal between the chamber 10 that is formed inside the tyre 7 and the outside of the rim 2.

Moreover, once the spoke 4 has been tensioned, the seal 30 is in close contact with the body 40 of the cup. Since the seal 30 is of rubber or another synthetic material and the body 40 of the cup is of metallic material, there is a high friction coefficient between the seal 30 and the body 40 of the cup, allowing, besides an airtight seal, a mechanical seal between the nipple 20 and the cup of the rim, thus avoiding easy loosening of the spokes.

Moreover, when a spoke 4 loosens, the head 25 of the nipple no longer presses the seal 30 on the body 40 of the cup, thus there is no longer a good seal between the nipple and the cup, with the result that a certain amount of air escapes from the chamber 10, causing the pressure in the tyre 7 to decrease. This decrease in the tyre pressure is a signal that indicates that one or more spokes have loosened and therefore need to be tensioned.

It should be noted that in this first embodiment the sealing means 14 have a seal 30 designed so as not to have to modify the shape of the cups 13 of the rims 2, so that the rims currently found on the market can be used. However, a second and a third embodiment will be described below, in which the sealing means designed for the nipple require slight modifications to the holes in the cups in the rims.

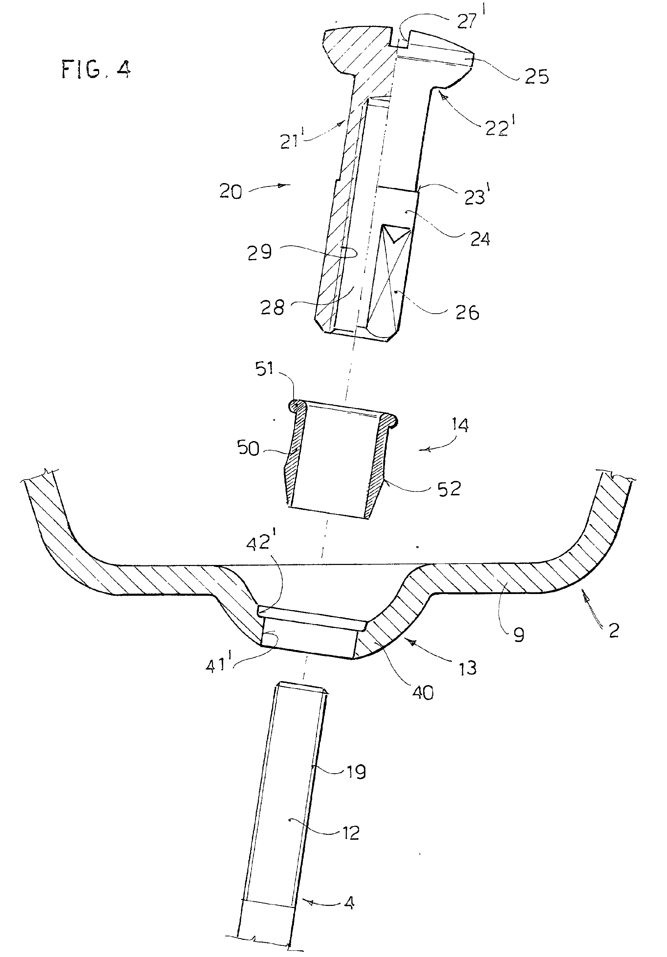

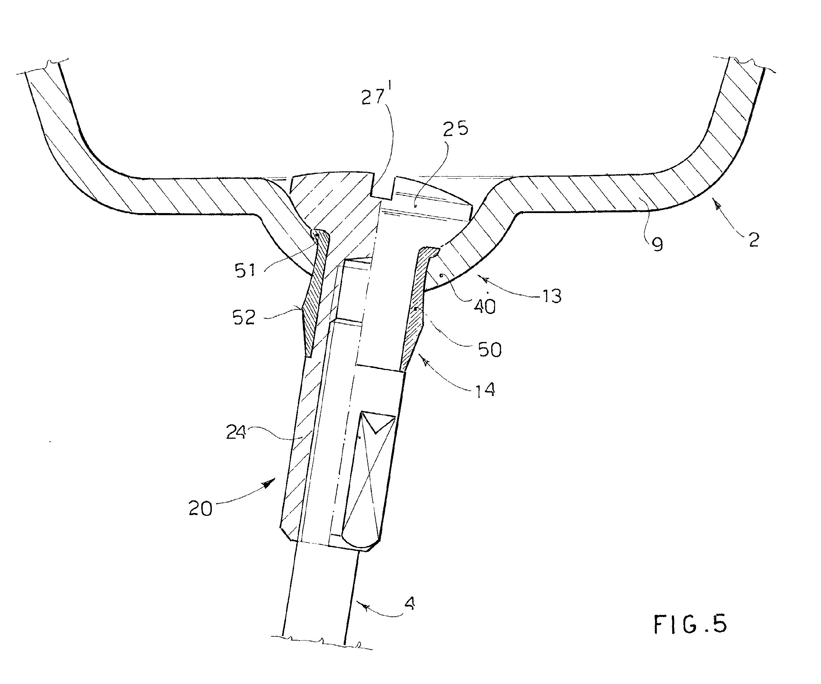

A second embodiment of the invention will be described with the aid of the figures 4 and 5 in which like or similar elements to those already illustrated are indicated with the same reference numerals used in the first embodiment and are not described.

In this second embodiment, unlike the first embodiment, beneath the head 25 of the nipple there is an elongated seat 21' which extends about half-way up the nipple 20. The seat 21' has a substantially cylindrical part defined by an upper shoulder 22', below the head of the nipple, and a lower shoulder 23' disposed substantially half-way up the body of the nipple.

The sealing means 14 have a seal 50 having a tubular shape with an inside diameter substantially equal to the outside diameter of the cylindrical part of the seat 21', so as to be able to be housed in the seat 21'. The tubular seal 50 has an annular upper edge 51 (O-ring) and a part with a greater thickness 52 situated in the vicinity of the end opposite to the annular edge 51.

A hole 41' is formed in the body 40 of the cup 13 of the rim 2, having a slightly greater diameter than the diameter of the hole 41 of the first embodiment. The hole 41' can be obtained by enlarging the hole 41 already provided in the cups 13 of known rims. The hole 41' must have an inside diameter substantially equal to the outside diameter of the tubular seal 50. Moreover the hole 41' has in its upper part a widened part 42' with a slightly greater diameter than the hole 41'. The diameter of the widened part 42' of the hole 41' must be substantially equal to the outside diameter of the annular edge 51 of the tubular seal 50.

As shown in Figure 5, the tubular seal 50 is applied in the seat 21' and the nipple 20 is screwed to the end 12 of the spoke. Screwing of the nipple 20 brings the head 25 of the nipple closer to the body 40 of the cup. Consequently the tubular seal 50 enters the hole 41' until the part with a greater diameter 52 protrudes from the hole 41' and the annular edge 51 of the tubular seal 50 abuts against the walls of the widened part 42' of the hole 41'. In this position, in which the spoke 4 is tensioned, the outer walls of the tubular seal 50 are in close contact with the inner walls of the hole 41', thus permitting the airtight seal between the nipple 20 and the cup 13 of the rim.

Moreover, as shown in Figures 4 and 5, on the head 25 of the nipple 20, as an alternative to the hole 27 of the first embodiment, a slit 27' has been provided such as to receive the point of a tool, such as a screwdriver for example, for screwing/unscrewing the nipple 20.

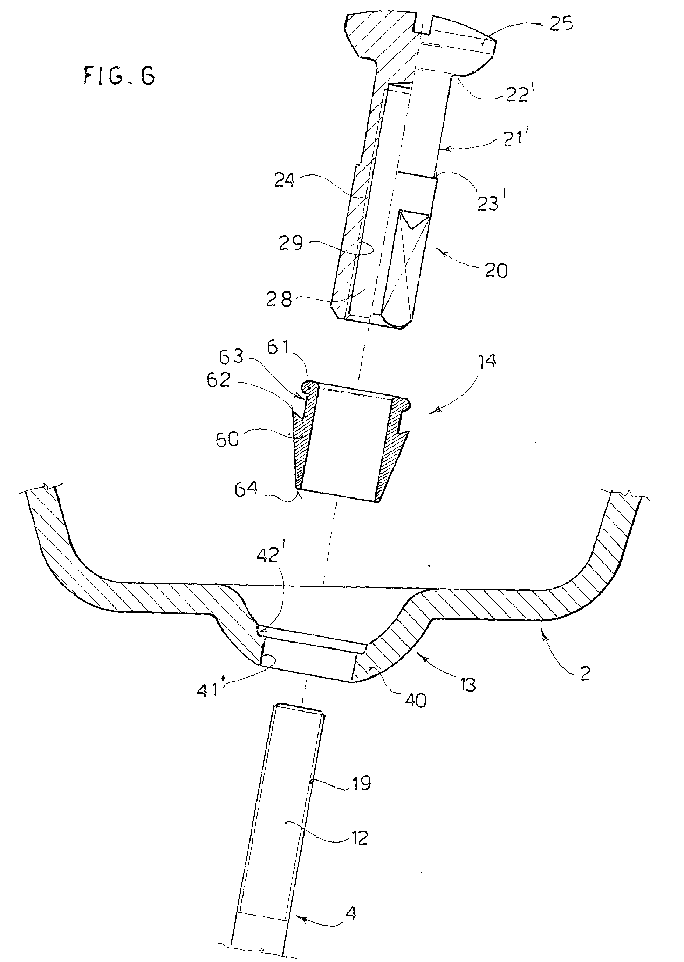

With the aid of Figure 6 a third embodiment of the invention will be described, in which like or similar elements to those already described are indicated with the same reference numerals used in the first and second embodiments and are not described.

As shown in Figure 6, the sealing means 14 comprise a tubular seal 60, substantially similar to the seal 50 of the second embodiment. The seal 60 has an upper annular edge 61 protruding outward. Beneath the upper edge 61 is an annular seat 63 delimited underneath by an annular abutment surface 62. The tubular seal 60 has a tapered shape from the abutment surface 62 to lower edge 64.

The tubular seal 60 is housed in the seat 21' of the nipple 20 and the nipple 20 is screwed to the end 12 of the spoke 4, so that the tubular seal enters the hole 41' and the upper annular edge 61 settles in the widened part 42' of the hole 41'. In this situation the inside lateral surface of the hole 41' is embedded in the seat 63 of the tubular seal 60, so as to ensure a perfect airtight seal between the nipple 20 and the cup 13.

Numerous changes and modifications of detail within the reach of a skilled in the art can be made to the present invention whilst remaining within the scope of the invention as set forth in the appended claims.

## Claims

1. A spoked wheel (1), particularly for motorcycles and motor vehicles, comprising an outer circular element or rim (2) made integral with an inner circular element or hub (3) by means of a plurality of spokes (4) tensioned by means of threaded connections or nipples (20) housed in respective seats or cups (13) in the rim comprising a through hole (41; 41', 42') formed in the circumferential part of said rim (2), said nipple comprising a head (25) which is housed in said cup and a substantially cylindrical body (24) which protrudes from said hole (41; 41', 42') in the cup, there being provided at the end of said body of the nipple a threaded hole (28), disposed axially, to receive a threaded end (12) of a spoke (4) **characterized in that** interposed between said nipples (20) and said cups (13) are sealing means (14) able to prevent the passage of air between the outer surface of said nipples and the side walls of said holes in the cups.

2. A spoked wheel (1) according to claim 1, **characterized in that** a tubeless tyre (7), without an inner tube, is mounted on said rim (2).

3. A spoked wheel (1) according to claim 1 or 2, **characterized in that** said threaded hole (29) in said nipple is a blind hole.

4. A spoked wheel (1) according to any one of the preceding claims, **characterized in that** said cups (13) are formed in the channel (9) of said rim (2).

5. A spoked wheel (1) according to any one of the preceding claims, **characterized in that** said sealing means (14) comprise a seal (30; 50; 60) housed in a seat (21; 21') formed in the body (24) of the nipple beneath the head (25) of the nipple.

6. A spoked wheel (1) according to claim 5, **characterized in that** said seal (30) is an O-ring disposed between said head (25) of the nipple (20) and the walls, facing thereto, of said hole (41) in the cup (13).

7. A spoked wheel (1) according to claim 5, **characterized in that** said seal (50; 60) is a tubular seal disposed between the side walls of said hole (41', 42') of the cup (13) and the side walls of said seat (21') formed in the body of the nipple.

8. A spoked wheel (1) according to claim 7, **characterized in that** said hole (41') in the cup comprises a part (42') with a greater diameter and a part with a smaller diameter and that said tubular seal (50; 60) comprises an annular upper edge (51; 61) destined to be housed in said wall (42') of greater diameter.

9. A spoked wheel (1) according to claim 8, **characterized in that** said tubular seal (60) comprises an annular seat (63) defined between said annular edge (61) and a wall (62) of the seal with a greater diameter, so that the side walls of the part of said hole (41') with a smaller diameter can be embedded in said annular seat (63) of the tubular seal (60).

10. A nipple (20) for tensioning of a spoke (4) of a spoked wheel (1), particularly for motor cycles and motor vehicles, comprising a substantially discoid head (25), able to be received in a seat or cup (13) provided in the rim (2) of the wheel (1), a substantially cylindrical body (24) able to pass inside a through hole provided in said cup in the rim, there being provided in said body (24) of the nipple a threaded hole (29) able to receive a threaded end (12) of a spoke (4), **characterized in that** it comprises sealing means (14) able to ensure an airtight seal in the gap formed between the side walls of said hole in the cup and the side walls of said nipple.

11. A nipple (20) according to claim 10, **characterized in that** said threaded hole (29) provided axially in the body (24) of the nipple is a blind hole.

12. A nipple (20) according to claim 10 or 11, **characterized in that** in the body (24) of the nipple, beneath the head (25) an annular seat (21; 21') able to receive said sealing means (14) is provided.

13. A nipple (20) according to any one of the preceding claims from 10 to 12, **characterized in that** said sealing means (14) comprise a seal (30; 50; 60).

14. A nipple (20) according to claim 13, **characterized in that** said seal (50; 60) is an O-ring seal.

15. A nipple (20) according to claim 13, **characterized in that** said seal (50; 60) is a tubular seal.

16. A nipple (20) according to claim 15, **characterized in that** said tubular seal (50; 60) comprises an annular edge.

17. A nipple (20) according to claim 16, **characterized in that** said tubular seal (50; 60) comprises an annular seat (63) defined between said annular edge (61) and a part with a greater diameter (62).
